# EUROPEAN PATENT SPECIFICATION

(11) **EP 3 711 134 B1**
(45) Date of publication and mention of the grant of the patent: **05.01.2022**
(21) Application number: 17797938.2
(22) Date of filing: 14.11.2017
(51) Int. Cl.: H02J 3/36, H02J 3/38, H02J 3/46, H02J 1/10

(54) **VOLTAGE DROOP-BASED METHOD IN A POWER TRANSMISSION SYSTEM**
VERFAHREN AUF DER BASIS VON SPANNUNGSABFALL IN EINEM LEISTUNGSÜBERTRAGUNGSSYSTEM
PROCÉDÉ BASÉ SUR UN RELÂCHEMENT DE TENSION DANS UN SYSTÈME DE TRANSMISSION D'ÉNERGIE

(43) Date of publication of application: 23.09.2020
(73) Proprietor: Hitachi Energy Switzerland AG, 5400 Baden (CH)
(72) Inventor: BERGGREN, Bertil, 722 10 Västerås (SE)
(74) Representative: AWA Sweden AB
(86) International application number: PCT/EP2017/079165
(87) International publication number: WO 2019/096367

(56) References cited:
- WO-A1-2012/000548
- WO-A1-2012/000549
- FRANCISCO GONZALEZ-LONGATT ET AL: "Effects of dc voltage control strategies of voltage response on multi-terminal HVDC following a disturbance", UNIVERSITIES POWER ENGINEERING CONFERENCE (UPEC), 2012 47TH INTERNATIONAL, IEEE, 4 September 2012 (2012-09-04), pages 1-6, XP032291247, DOI: 10.1109/UPEC.2012.6398553 ISBN: 978-1-4673-2854-8

## Description

### TECHNICAL FIELD

The present invention relates to, inter alia, a method in a power transmission system for controlling operation thereof using a voltage droop-based control method.

### BACKGROUND

Controlling operation of multi-terminal power transmission systems, such as multi-terminal High Voltage Direct Current (HVDC) power transmission systems, is generally difficult. With multi-terminal power transmission systems, it is herein meant power transmission systems comprising more than two terminals, or converter stations, which are interconnected. A multi-terminal power transmission system may for example comprise or be constituted by a DC grid, such as, for example, a HVDC grid. In the following, such multi-terminal power transmission systems may be referred to as DC grids, without any loss of generality, and it is to be understood that even though reference may be made herein to a DC grid, it could instead be referred to another type of multi-terminal power transmission system, such as, for example, a HVDC power transmission system.

Existing HVDC power transmission systems are usually constituted by point-to-point power transmission systems, i.e. power transmission systems including no more than two terminals. However, by means of Voltage Source Converter (VSC) technology, control of multi-terminal power transmission systems may be facilitated or even enabled.

One of the main aspects of controlling operation of DC grids is the primary control of the DC grid, i.e. the control of active power and DC voltage of the DC grid, and in particular if and when the DC grid is subjected to disturbances, such as, for example, one or more converter stations being disconnected from at least a part of the remaining DC grid, which may be referred to as tripping of the converter station(s). Such disturbances to which the DC grid may be subjected may be referred to as unscheduled power imbalances in the DC grid.

In case there would be a surplus of power in the DC grid, i.e. if the power injected into the DC grid would be higher as compared to the power that is extracted from the DC grid, the DC voltages of the DC grid will in general increase. And vice versa, in case there would be a deficit in power in the DC grid, i.e. if the power extracted from the DC grid would be higher as compared to the power that is injected into the DC grid, the DC voltages of the DC grid will in general decrease.

The primary control of the DC grid may in general have two main objectives at unscheduled power imbalances in the DC grid. These main objectives are to ensure that the magnitudes of the DC voltages of the converter stations in the DC grid remain within respective target DC voltage ranges (or allowed DC voltage ranges), for all likely causes of such unscheduled power imbalances in the DC grid, and to control how power at the different converter stations in the DC grid is distributed during the power imbalance in the DC grid. Different methods for controlling operation of the DC grid have been proposed, such as, for example, the voltage margin method and different droop control methods.

Many control concepts based on power deviation drooped against voltage deviation in DC power systems have been devised with inspiration from control concepts based on power deviation drooped against frequency deviation in AC power systems, for controlling frequency. However, in DC power systems, such as DC grids, there is no naturally occurring - and for the converter stations commonly available - signal that reflects the power balance in the DC power system (e.g., which reflects the overall power in the DC power system in relation to DC voltage distribution over the converter stations). In AC power systems, the frequency constitutes such a signal (at least at steady state of the AC power system). Droop control methods that have been proposed for DC grids are generally based on DC voltage measurements carried out locally at each converter station. However, as DC voltages may vary to a certain extent across a DC grid which transfers power, voltage drops during the power transfer may cause difficulties in realizing a highly accurate primary control of the DC grid. Another type of droop control method is disclosed in WO 2012/000549 A1.

WO 2012/000548 A1 discloses a method for controlling power flow within a multi-terminal DC power transmission system comprising two or more converter stations. The method comprises the steps of controlling the power flow to a steady state reference operating point for operating points within a control dead band defined for each respective converter station, and controlling the power flow by means of droop control in at least one of the converter stations upon detection of exceeding of an end point of one or more of the control dead bands.

Francisco Gonzalez-Longatt and Juan Manuel Roldan, "Effects of DC voltage control strategies of voltage response on multi-terminal HVDC following a disturbance", Universities Power Engineering Conference (UPEC), 2012 47th International, IEEE, 4 September 2012, describes the effects of DC voltage control strategy on the dynamic behavior of bus voltages at multi-terminal HVDC following a system disturbance, and describes simulations of two different DC voltage control methods: voltage margin method and voltagedroop method.

EP 2 270 969 A1 describes a method for controlling a plurality of power converters connected in parallel between an ac arrangement and a common dc link, each of the power converters operating in accordance with a pulse width modulation (PWM) strategy and having an independently variable dc link reference voltage. The method described in EP 2 270 969 A1 comprises modifying an output voltage droop characteristic of at least one of the plurality of parallel connected power converters by varying the dc link reference voltage of the at least one power converter based on the output current of the at least one power converter and the average of the output currents of the plurality of power converters.

### SUMMARY

The method disclosed in WO 2012/000549 A1 is a method for controlling power flow within a DC power transmission network, and may be referred to as a pilot voltage droop control method. The pilot voltage droop control method is based on generating and using a signal which reflects the overall power in the DC power system in relation to DC voltage distribution over the converter stations. The signal is common to (i.e. shared by) all converter stations in the DC power transmission network which are controlled using pilot voltage droop control method, and the signal may be communicated to or from at least one of those converter stations such that the signal is available to all of those converter stations. The signal may for example comprise a voltage of one of the converter stations of the DC power transmission network, or an average of voltages of several ones of the converter stations of the DC power transmission network. By providing the signal to all converter stations in the DC power transmission network which are controlled using pilot voltage droop control method, all of those converter stations may be provided with a signal that reflects the power balance in the DC power system (e.g., which reflects the overall power in the DC power system in relation to DC voltage distribution over the converter stations), similarly to how a frequency control method in an AC power system may use frequency in the AC power system as a common signal for terminals in the AC power system.

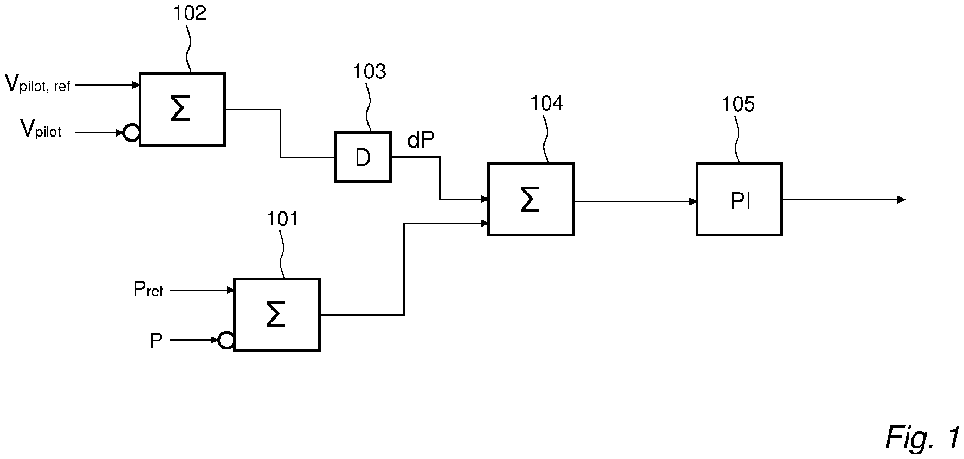

Figure 1 is a schematic illustration of an example of the pilot voltage droop control method for a converter station in the DC power transmission network. The method illustrated in Figure 1 may apply to each converter station in the DC power transmission network which is controlled using the pilot voltage droop control method. According to the illustrated example, the converter station is a VSC station, and operates according to VSC operating principles. The converter station may on its AC side be connected to a point of common coupling (PCC) in an AC power system network and may on its DC side be connected to the DC power transmission network. The converter station may be controlled by controlling AC voltage at the PCC or the amount of reactive power injected into the AC power system at the PCC, and controlling DC voltage V at the DC side, or DC terminal, of the converter station or the amount of active power injected into the AC power system. The power flowing into the converter station from the AC side, P, may be measured, e.g., at the PCC. The power P may be compared with a reference power P_{ref}. The reference power could in alternative be referred to as a target power, e.g., for the converter station.

With reference to Figure 1, at 101, the difference P_{ref}-P is determined.

Further, at 102, the difference V_{pilot, ref} - Vₚᵢₗₒₜ is determined. V_{pilot,} the so called pilot voltage, may be determined as a voltage of a selected one of the converter stations of the DC power transmission network, as indicated in the foregoing. The selected one of the converter stations may be referred to as the pilot converter station, or the pilot node, in the DC power transmission network. V_{pilot, ref} is a pilot voltage reference, which in alternative could be referred to as a pilot voltage target. The difference V_{pilot, ref} - V_{pilot,} or the individual values of Vₚᵢₗₒₜ and V_{pilot, ref}, respectively, may be communicated to all of the other converter stations which are controlled using the pilot voltage droop control method. Thereby, all of the other converter stations which are controlled using the pilot voltage droop control method may have the pilot voltage difference V_{pilot, ref} - Vₚᵢₗₒₜ available. At steady state, the following relation may hold for each of the converter stations which are controlled using the pilot voltage droop control method: (P_{ref} - P) + (Vₚᵢₗₒₜ, _{ref} - Vₚᵢₗₒₜ)D = 0, where D is a droop constant for the converter station. D may be larger than or equal to zero.

At 103, dP = (Vₚᵢₗₒₜ, _{ref} - Vₚᵢₗₒₜ)D is determined, and dP is output from 103, as indicated in Figure 1.

At 104, (P_{ref} - P) + (Vₚᵢₗₒₜ, _{ref} - Vₚᵢₗₒₜ)D = (P_{ref} - P) + dP is determined.

The quantity, or signal, (P_{ref} - P) + dP determined at 104 may be input into a control block, or regulating means, 105, which for example may comprise a PI-regulator, as indicated in Figure 1, comprising a proportional gain device and integral gain device. The signal outputted from the control block 105 may for example be used in control circuits, or control loops, for providing switching pulses to semiconductor devices of the converter station.

It follows from the foregoing that if V_{pilot, ref} - Vₚᵢₗₒₜ = 0, then for all of the converter stations the following will be satisfied: P_{ref} - P =0, meaning that for all of the converter stations, the power flowing into the converter station from its AC side will be equal to its reference power. Furthermore, if (Vₚᵢₗₒₜ, _{ref} - Vₚᵢₗₒₜ) > 0, then dP = (Vₚᵢₗₒₜ, ref - Vₚᵢₗₒₜ)D > 0, and consequently (P_{ref} - P) = -dP < 0. And if V_{pilot, ref} - Vₚᵢₗₒₜ < 0, then dP = (Vₚᵢₗₒₜ, _{ref} - Vₚᵢₗₒₜ)D < 0, and consequently, (P_{ref} - P) = -dP > 0. Thus, if the pilot voltage difference would be positive, which is the case if there is deficit of power in the DC power transmission network (such as discussed in the foregoing), then the converter stations acting as rectifiers will increase their power injection into the DC power transmission network, whereas the converter stations acting as inverters will reduce their power extraction from the DC power transmission network. The opposite is true if the pilot voltage difference would be negative. Thus, if the pilot voltage difference would be negative, which is the case if there is surplus of power in the DC power transmission network (such as discussed in the foregoing), then the converter stations acting as rectifiers will reduce their power injection into the DC power transmission network, whereas the converter stations acting as inverters will increase their power extraction from the DC power transmission network.

As described in B. Berggren et al., "DC Grid Control Through the Pilot Voltage Droop Concept - Methodology for Establishing Droop Constants", IEEE Transactions on Power Systems, volume 30, no. 5, pages 2312-2320, September 2015, it is possible to determine the droop constants D such that the pilot voltage remains within a target DC voltage range (or allowed DC voltage range), and such that a relatively high flexibility in controlling of how power at the different converter stations in the DC power transmission network is distributed during the power imbalance in the DC power transmission network may be achieved.

Even though the above-described pilot voltage droop control method for converter stations in a DC power transmission network facilitates or allows for achieving a relatively high flexibility in controlling of how power at the different converter stations in the DC power transmission network is distributed during a power imbalance in the DC power transmission network, there is still a need in the art for increasing such flexibility even further. In the following an example scenario will be described to illustrate when an increased flexibility in controlling of how power at the different converter stations in the DC power transmission network is distributed during a power imbalance in the DC power transmission network would be desired. In the example scenario, the converter stations are controlled using the above-described pilot voltage droop control method.

According to the above-described pilot voltage droop control method, there is one droop constant D associated with each converter station that is controlled using the pilot voltage droop control method. Therefore, each of those converter stations will respond with the same droop constant regardless of whether there is a surplus of power in the DC power transmission network or a deficit of power in the DC power transmission network (such as discussed in the foregoing).

Assume that the DC power transmission network, or DC grid, comprises four converter stations, of which two are normally operating in rectifier mode (i.e. as rectifiers), and the other two are normally operating in inverter mode (i.e. as inverters). Further assume that the four converter stations are configured such that the overall rectifying capacity or capability of the DC power transmission network, or DC grid, corresponds to, or substantially corresponds to, the overall inverting capacity or capability of the DC power transmission network, or DC grid. When the DC power transmission network, or DC grid, is at an operating point when both the converter stations which are operating in rectifier mode and the converter stations which are operating in inverter mode are relatively highly loaded, both the converter stations operating in rectifier mode and the converter stations operating in inverter mode will be close to their maximum capacities or capabilities with respect to rectifying and inverting, respectively. As indicated in the foregoing, the DC power transmission network, or DC grid, may be subjected to disturbances, such as, for example, one of the converter stations being disconnected from at least a part of the remaining DC power transmission network, which may be referred to as tripping of the converter station. Further assuming that all of the four converter stations are controlled using the above-described pilot voltage droop control method, in case a converter station operating in inverter mode is tripped, it would be preferred for the converter stations operating in rectifier mode to have their rectifying power reduced significantly, since the other converter station operating in inverter mode (which is not tripped) may be close to its maximum capacity or capability with respect to inverting, and may therefore be unable to significantly increase its inverting power in order to compensate for the converter station operating in inverter mode that has been tripped. Thus, in this case, it would be desired for the other converter station operating in inverter mode (which is not tripped) to have a relatively small droop constant, and the converter stations operating in rectifier mode to have relatively large droop constants. Similarly, in case a converter station operating in rectifier mode is tripped, it would be preferred for the converter stations operating in inverter mode to have their inverting power reduced significantly, since the other converter station operating in rectifier mode (which is not tripped) may be close to its maximum capacity or capability with respect to rectifying, and may therefore be unable to significantly increase its rectifying power in order to compensate for the converter station operating in rectifier mode that has been tripped. In this case it would be desired for the other converter station operating in rectifying mode (which is not tripped) to have a relatively small droop constant, and the converter stations operating in inverting mode to have relatively large droop constants. However, with only one droop constant associated with each converter station, as per the above-described pilot voltage droop control method, it is of course not possible to have the droop constants both relatively large and relatively small at the same time. This would however be preferred, since in case one of the four converter stations of the DC power transmission network is tripped, it may not be known a priori if a converter station which is tripped is operating in inverter mode or in rectifier mode.

In view of the foregoing, a concern of the present invention is to provide a method in a power transmission system for controlling operation thereof based on a pilot voltage droop control method, which method facilitates or allows for a greater flexibility in controlling operation of the terminals (or converter stations) in the power transmission system for example if and when the power transmission system is subjected to disturbances.

To address at least one of this concern and other concerns, a method in a power transmission system and a processing and/or control unit configured to be used in conjunction with a power transmission system in accordance with the independent claims are provided. Preferred embodiments are defined by the dependent claims.

According to a first aspect, a method according to independent claim 1 is provided.

By means of controlling operation of the respective ones of the converter stations, by providing the control signals determined for the respective ones of the converter stations to the respective ones of the converter stations, power flow in the power transmission system is in turn be controlled.

As mentioned in the foregoing, the power transmission system power flow parameter that is determined is indicative of a difference between the power flow into the power transmission system and the power flow out of the power transmission system, and the drooped error signals determined for the respective ones of the converter stations are determined based on the power transmission system power flow parameter. Thus, the drooped error signals may depend on a difference between the power flow into the power transmission system and the power flow out of the power transmission system.

As indicated in the foregoing with reference to the above-described exemplary scenario for the DC power transmission network, or DC grid, comprising four converter stations controlled using the pilot voltage droop control method, some of the converter stations of the power transmission system may (mainly) operate in rectifier mode (i.e. as rectifiers), and other converter stations (or the remaining ones) may (mainly) operate in inverter mode (i.e. as inverters).

In case one of the converter stations of the power transmission system would be disconnected from at least a part of the remaining power transmission system, which may be referred to as tripping of the converter station, then there will be a deficit of power in the power transmission system (i.e. the power extracted from the power transmission system will be higher as compared to the power that is injected into the power transmission system), if the converter station that is tripped is operating in rectifier mode. On the other hand, if the converter station that is tripped is operating in inverter mode, then there will be a surplus of power in the power transmission system (i.e. the power injected into the power transmission system will be higher as compared to the power that is extracted from the power transmission system). Since the power transmission system power flow parameter that is determined is indicative of a difference between the power flow into the power transmission system and the power flow out of the power transmission system, and the drooped error signals determined for the respective ones of the converter stations are determined based on the power transmission system power flow parameter, the drooped error signal - and hence the at least one control signal - determined for each of the converter stations takes into account whether there is a surplus or a deficit of power in the power transmission system. This may facilitate for increasing the flexibility in controlling operation of the converter stations in the power transmission system for example with respect to the above-described pilot voltage droop control method.

The power transmission system power flow parameter is determined based on the pilot feedback signal. For example, the power transmission system power flow parameter may be determined as being equal to, or a function of (e.g., proportional to) the pilot feedback signal.

For example, with reference to Figure 1, the pilot feedback signal may comprise or be constituted by the difference V_{pilot, ref} - V_{pilot,} where the pilot voltage Vₚᵢₗₒₜ may be determined as a voltage of a selected one of the converter stations of the power transmission system. The selected one of the converter stations may be referred to as the pilot converter station, or the pilot node, in the power transmission system. V_{pilot, ref} is a pilot voltage reference, which in alternative could be referred to as a pilot voltage target. The pilot voltage difference V_{pilot, ref} - V_{pilot,} or the individual values of Vₚᵢₗₒₜ and V_{pilot, ref}, respectively, may be communicated to all of the other converter stations which are controlled as per the method according to the first aspect. As per the description in the foregoing, if the pilot voltage difference V_{pilot, ref} - Vₚᵢₗₒₜ is positive, then is a deficit of power in the power transmission system, and if the pilot voltage difference V_{pilot, ref} - Vₚᵢₗₒₜ is negative, then there is a surplus of power in the power transmission system. Thus, by determining the power transmission system power flow parameter based on the pilot feedback signal, the power transmission system power flow parameter may be indicative of a difference between the power flow into the power transmission system and the power flow out of the power transmission system.

The power transmission system may comprise a multi-terminal power transmission system, and may comprise a DC power system, such as, for example, a HVDC power system. The power transmission system could comprise or be constituted by a DC grid, such as, for example, a HVDC grid. The power transmission system may comprise three or more interconnected converter stations.

The at least one voltage level in the power transmission system - on which the pilot feedback signal is based - is based on at least one voltage level of at least one of the converter stations, and may possibly be based on at least one voltage level of several ones of the converter stations (e.g., an average voltage level based on voltage levels of respective ones of some of the converter stations). The at least one voltage level of at least one of the converter stations may be a sensed or measured voltage level, which may be sensed or measured for example by a voltage sensor at or comprised in the respective converter station(s).

As indicated in the foregoing, the pilot feedback signal may for example be based on at least a difference between the at least one voltage level in the power transmission system and the reference voltage level.

It is to be understood that there may be additional converter stations in the power transmission system, the operation of which converter stations may not be controlled as per the method according to the first aspect. Thus, not every converter station that may be comprised in the power transmission system may be controlled as per the method according to the first aspect.

The drooped error signal may for example be determined based on a droop parameter. For each of the converter stations, one droop constant of at least two droop constants may be selected, and the droop parameter may be determined based on the selected droop constant. Each of the at least two droop constants may have a selected or predefined value corresponding to a value or a range of values of the power transmission system power flow parameter. For example, if there is more power flowing into the power transmission system compared to the power flowing out of the power transmission system, a certain droop constant of the at least two droop constants may be selected, while if there is less power flowing into the power transmission system compared to the power flowing out of the power transmission system, another droop constant of the at least two droop constants may be selected.

According to the present invention, the drooped error signal is determined based on a droop parameter, and for each of the converter stations, one droop constant of two droop constants is selected, with the droop parameter being determined based on the selected droop constant. Each of the two droop constants has a selected or predefined value corresponding to the sign of the power transmission system power flow parameter. Thus, if the sign of the value of the power transmission system power flow parameter would be, for example, positive, a certain droop constant of the two droop constants may be selected, while if the sign of the value of the power transmission system power flow parameter would be negative, the other droop constant of the two droop constants may be selected. As mentioned in the foregoing, the power transmission system power flow parameter is determined based on the pilot feedback signal, for example as being equal to the pilot feedback signal. And with reference to Figure 1, the pilot feedback signal may for example comprise or be constituted by the difference V_{pilot, ref} - V_{pilot,} with the sign of the difference V_{pilot, ref} - Vₚᵢₗₒₜ indicating whether there is a deficit or surplus of power in the power transmission system (when the sign of the difference V_{pilot, ref} - Vₚᵢₗₒₜ is negative and positive, respectively). Thus, based on the sign of the difference V_{pilot, ref} - V_{pilot,} one of the two droop constants may be selected. And as mentioned in the foregoing, the droop parameter determined based on the selected droop constant, and, in turn, the drooped error signal is determined based on the droop parameter.

With reference to any of the above-described examples, the droop parameter may be determined as being equal to the selected droop constant. The drooped error signal may be determined by multiplying the droop parameter with the power transmission system power flow parameter.

According to another embodiment of the present invention, the drooped error signal may be determined based on a droop parameter, and for each of the converter stations, a droop constant may be selected as the droop parameter from a set of at least two droop constants associated with the converter station, with the drooped error signal for the converter station being determined based on the selected droop constant. Each of the at least two droop constants may have a selected or predefined value corresponding to a value or a range of values of the power transmission system power flow parameter.

The set of at least two droop constants associated with at least one of the converter stations may be different from the set of at least two droop constants associated with at least one other converter station. By a set of at least two droop constants associated with at least one of the converter stations being different from the set of at least two droop constants associated with another one of the converter stations, it is meant that at least one droop constant of a first set of droop constants, the first set of droop constants being associated with at least one of the converter stations, may be different from at least one droop constant of a second set of droop constants, the second set of droop constants being associated with another one of the converter stations. It may in addition, or in alternative, mean that the number of elements in the first set of droop constants is different from the number of elements in the second set of droop constants.

According to another exemplary embodiment of the present invention, the sets of at least two droop constants associated with the respective ones of the converter stations may be the same.

The pilot feedback signal may be determined based on at least a voltage level of a predetermined (or selected) one of the converter stations, and possibly a reference voltage level. The reference voltage level may be a reference voltage level, or target voltage level, of the predetermined (or selected) one of the converter stations. The pilot feedback signal may for example be determined based on at least a difference between voltage level of a predetermined one of the converter stations and the reference voltage level.

The pilot feedback signal may for example be determined based on a combination of voltage levels of at least two of the converter stations, and possibly a reference voltage level. The pilot feedback signal may for example be determined based on at least a difference between a voltage level, which may be based on a combination of voltage levels of at least two of the converter stations, and the reference voltage level. The combination of voltage levels of at least two of the converter stations may for example be determined by averaging the voltage levels of at least two of the converter stations. The averaging of the voltage levels of at least two of the converter stations may comprise determining a weighted average of the voltage levels of at least two of the converter stations. The pilot feedback signal may for example be determined based on at least a difference between the averaged voltage level, determined by averaging the voltage levels of at least two of the converter stations, and the reference voltage level.

The power transmission system may comprise communication means, which may be configured to permit communication between at least some of the converter stations. The pilot feedback signal may be communicated to at least one of the converter stations via the communication means. The communication means may comprise or be constituted by any appropriate wireless and/or wired communication means, such as, for example any appropriate wireless and/or wired communication means known in the art. For example, the communication means may for example comprise a wireless communication network permitting communication between at least some of the converter stations in the power transmission system in a wireless fashion, e.g., by means of radio frequency (RF) communication. The communication between at least some of the converter stations in the power transmission system may for example utilize any appropriate communications protocol as known in the art.

The determining of a control signal for each of the converter stations may further be based on a feedback power flow. The feedback power flow may be based on a power flow in the power transmission system and a reference power flow. The feedback power flow may for example be based on a difference between the power flow in the power transmission system and the reference power flow.

Each converter station may have an AC side, connected to an AC power system. Each converter station may in addition have a DC side, connected to a DC power system. For each of the converter stations, a feedback power flow may be determined based on at least a power flow into the converter station from its AC side and a reference power flow for the converter station. The feedback power flow for each of the converter stations may for example be based on a difference between the power flow into the converter station from its AC side and the reference power flow. The determining of a control signal for each of the converter stations may further be based on the feedback power flow for the respective ones of the converter stations.

Each of the converter stations may comprise at least one converter valve, which may be controllable by means of providing at least one converter valve current order thereto. The controlling of operation of the respective ones of the converter stations may comprise determining at least one converter valve current order for the at least one converter valve of the respective ones of the converter stations based on the control signals determined for the respective ones of the converter stations, and providing each of the converter stations with the corresponding at least one converter valve current order.

According to a second aspect, a processing and/or control unit according to independent claim 14 is provided.

The processing and/or control unit may alternatively be referred to as control and/or processing circuitry, or a control and/or processing module. The processing and/or control unit may for example include or be constituted by any suitable central processing unit (CPU), microcontroller, digital signal processor (DSP), Application Specific Integrated Circuit (ASIC), Field Programmable Gate Array (FPGA), etc., or any combination thereof. The processing and/or control unit may optionally be capable of executing software instructions stored in a computer program product e.g. in the form of a memory. The memory may for example be any combination of read and write memory (RAM) and read only memory (ROM). The memory may comprise persistent storage, which for example can be a magnetic memory, an optical memory, a solid state memory or a remotely mounted memory, or any combination thereof.

According to a third aspect, there is provided a computer program product configured to, when executed in a processing and/or control unit according to the second aspect, perform a method according to the first aspect.

According to a fourth aspect, there is provided a computer-readable storage medium on which there is stored a computer program product configured to, when executed in a processing and/or control unit according to the second aspect, perform a method according to the first aspect. The computer-readable storage medium may for example include a Digital Versatile Disc (DVD) or a floppy disk or any other suitable type of computer-readable means or computer-readable (digital) storage medium, such as, but not limited to, a nonvolatile memory, a hard disk drive, a Compact Disc (CD), a Flash memory, magnetic tape, a Universal Serial Bus (USB) memory device, a Zip drive, etc.

Further objects and advantages of the present invention are described in the following by means of exemplifying embodiments. Further features of, and advantages with, the present invention will become apparent when studying the appended claims and the description herein. The scope of protection is defined by the independent claims.

### BRIEF DESCRIPTION OF THE DRAWINGS

Exemplifying embodiments of the present invention will be described below with reference to the accompanying drawings.
Figure 1 is a schematic illustration of an example of a pilot voltage droop control method for a converter station in a DC power transmission network.
Figure 2 is a schematic illustration of a power transmission system in accordance with an embodiment of the present invention.
Figure 3 is a schematic illustration of a method according to an embodiment of the present invention.

All the figures are schematic, not necessarily to scale, and generally only show parts which are necessary in order to elucidate embodiments of the present invention, wherein other parts may be omitted or merely suggested.

### DETAILED DESCRIPTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments are provided by way of example so that this disclosure will convey the scope of the present invention to those skilled in the art, which is defined by the independent claims.

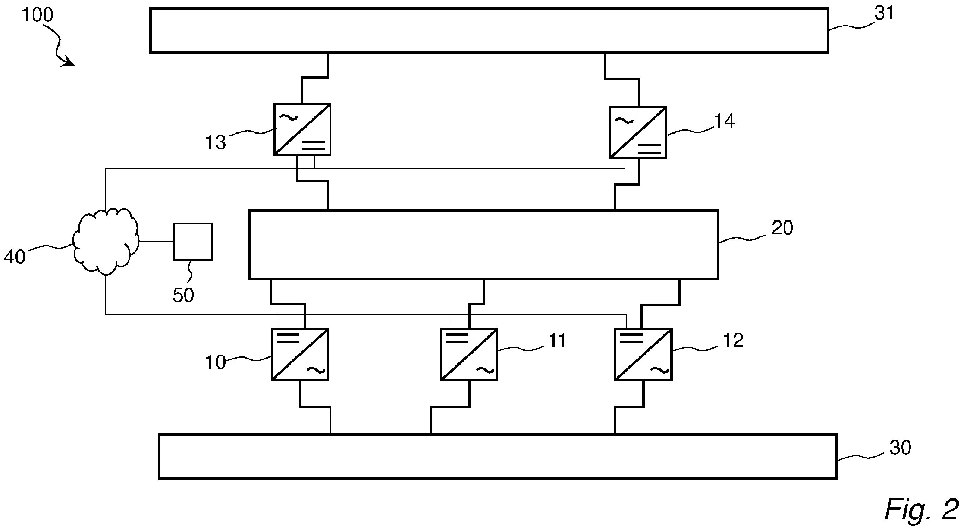

Figure 2 is a schematic illustration of a power transmission system 100 in accordance with an embodiment of the present invention. The power transmission system 100 comprises a plurality of interconnected converter stations 10, 11, 12, 13, 14. As indicated in Figure 2, each of the converter stations 10, 11, 12, 13, 14 is configured to convert DC power to AC power, or vice versa. In accordance with the embodiment of the present invention illustrated in Figure 2, each of the converter stations 10, 11, 12, 13, 14 comprises an inverter, configured to convert DC power to AC power, and a rectifier, configured to convert AC power to DC power.

The converter stations 10, 11, 12, 13, 14 are interconnected via a DC power system, schematically indicated at 20. The DC power system 20 may in alternative be referred to as a DC power transfer network. Each of the converter stations 10, 11, 12 is connected at an AC side thereof to a first AC power system, schematically indicated at 30, and each of the converter stations 13, 14 is connected at an AC side thereof to a second AC power system, schematically indicated at 31. Each of the converter stations 10, 11, 12 is connected at a DC side thereof to the DC power system 20, and each of the converter stations 13, 14 is connected at a DC side thereof to the DC power system 20.

The connection between the converter stations 10, 11, 12, 13, 14 and the DC power system 20 and the first or second AC power system 30 and 31, respectively, may be realized by means of power transmission lines, each of which may comprise at least one cable or overhead line, or a combination of at least one cable and at least one overhead line. Each or any of the DC power system 20 and the first or second AC power system 30 and 31, respectively, may comprise at least one power transmission line, which may comprise at least one cable or overhead line, or a combination of at least one cable and at least one overhead line.

It is to be understood that the number of converter stations illustrated in Figure 2 is according to an example, and that the power transmission system 100 could comprise fewer or more interconnected converter stations than illustrated in Figure 2. Further, it is to be understood that the way in which the converter stations 10, 11, 12, 13, 14 are interconnected (via the DC power system 20) is according to an example, and that other ways of interconnecting the converter stations 10, 11, 12, 13, 14 are possible. For example, each or any one of the converter stations 10, 11, 12, 13, 14 could be connected to the DC power system 20 at the respective DC side thereof via one or more intermediate elements (not shown in Figure 2).

The power transmission system 100 may for example comprise a HVDC power system, or may comprise or be constituted by a DC grid, such as, for example, a HVDC grid.

Operation of the converter stations 10, 11, 12, 13, 14 is controlled by means of providing at least one control signal to the respective ones of the converter stations 10, 11, 12, 13, 14.

Each of the converter stations 10, 11, 12, 13, 14 may comprise and/or be associated with a processing and/or control unit (not shown in Figure 2). The processing and/or control units corresponding to the respective ones of the converter stations 10, 11, 12, 13, 14 could for example be included in, or be part of, the respective ones of the converter stations 10, 11, 12, 13, 14, or could be communicatively coupled thereto, via wired and/or wireless communication means or techniques, for example via any appropriate wired and/or wireless communication means or techniques as known in the art. The communications between the converter stations 10, 11, 12, 13, 14 and their corresponding processing and/or control units may be bidirectional or unidirectional, and may comprise at least one signal (e.g., information, messages, commands and/or data). The processing and/or control units comprised in or being associated with the respective ones of the converter stations 10, 11, 12, 13, 14 may be configured to control, for example, power flow into and/or out of, and/or voltage of, the respective ones of the converter stations 10, 11, 12, 13, 14.

In alternative, or in addition, the power transmission system 100 may comprise communication means, schematically indicated at 40, configured to permit communication between at least some of the converter stations 10, 11, 12, 13, 14. The communications means may facilitate or allow for communications between a processing and/or control unit 50 (which in alternative may be referred to as a controller 50) and the respective ones of the converter stations 10, 11, 12, 13, 14. To that end, the processing and/or control unit 50 may be communicatively coupled to the communication means 40 via wired and/or wireless communication means or techniques, for example via any appropriate wired and/or wireless communication means or techniques as known in the art. The communication means 40 may for example comprise a communications system or network, such as, for example, a telecommunications network and/or a wide area network. The communications between the converter stations 10, 11, 12, 13, 14 and the processing and/or control unit 50 may be bidirectional or unidirectional, and may comprise at least one signal (e.g., information, messages, commands and/or data). The processing and/or control unit 50 may be configured to control, for example, power flow into and/or out of, and/or voltage of, at least one or the converter stations 10, 11, 12, 13, 14.

Each or any one of the processing and/or control unit 50 and the processing and/or control units comprised in or being associated with the respective ones of the converter stations 10, 11, 12, 13, 14 may for example include or be constituted by any suitable CPU, microcontroller, DSP, ASIC, FPGA, etc., or any combination thereof, and may optionally be capable of executing software instructions stored in a computer program product e.g. in the form of a memory. The memory may for example be any combination of read and write memory (RAM) and read only memory (ROM). The memory may comprise persistent storage, which for example can be a magnetic memory, an optical memory, a solid state memory or a remotely mounted memory, or any combination thereof.

By wireless communication means or techniques, it may be meant, for example, radio frequency (RF) communication, or free-space optical communication (e.g., based on laser). By wired communication means or techniques, it may be meant, for example, one or more non-wireless communication means or techniques such as, for example, employing at least one optical waveguide, or optical transmission line (e.g., an optical fiber), and/or at least one electrical conductor (e.g., a cable or wire, e.g., a copper conductor or cable, or copper wire).

It is to be understood that the power transmission system 100 may comprise additional components, means or elements, which are not shown in Figure 2. Such additional components, means or elements may for example comprise one or more transformers, filters, etc.

Operation of the respective ones of the converter stations 10, 11, 12, 13, 14 is controlled by providing each of the converter stations 10, 11, 12, 13, 14 with at least one control signal determined for the converter station 10, 11, 12, 13, 14.

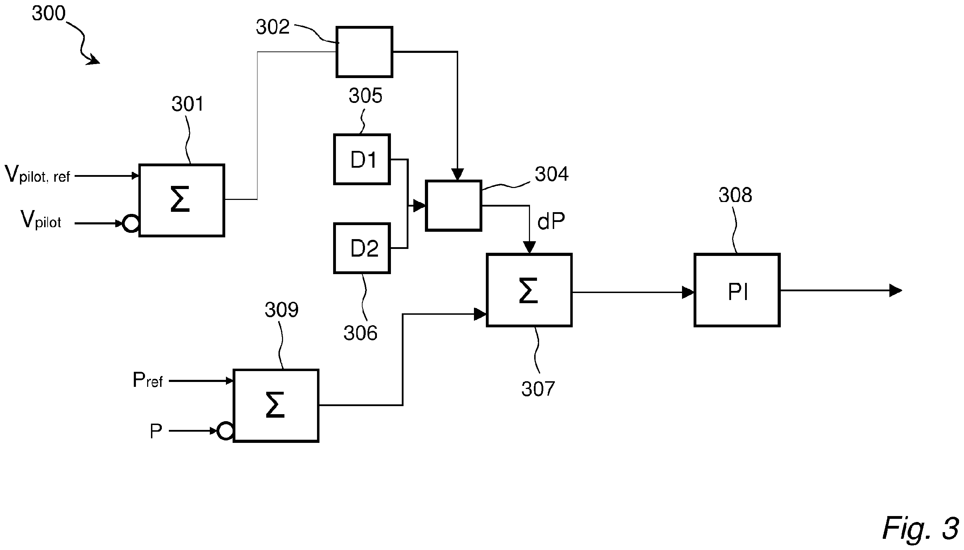

The determining of the at least one control signal for each of the converter stations 10, 11, 12, 13, 14 may be carried out using a method 300 according to an embodiment of the present invention as described in the following with reference to Figure 3, which is a schematic illustration of the method 300.

At 301, a pilot feedback signal is determined. The pilot feedback signal is based on at least one voltage level in the power transmission system, and is common for all of the converter stations 10, 11, 12, 13, 14.

In accordance with the embodiment of the present invention illustrated in Figure 3, the pilot feedback signal is determined based on the so called pilot voltage V_{pilot,} which may be a voltage of a selected one of the converter stations 10, 11, 12, 13, 14, and the pilot feedback signal is determined as a difference between the pilot voltage Vₚᵢₗₒₜ and a pilot voltage reference (which could be referred to as a pilot voltage target) V_{pilot, ref}, e.g., the difference V_{pilot, ref} - V_{pilot,} which may be referred to as the pilot voltage difference. The selected one of the converter stations 10, 11, 12, 13, 14 may be referred to as a pilot node, or pilot converter station. In alternative, the pilot feedback signal could be determined based on a combination of voltage levels of at least two selected ones of the converter stations 10, 11, 12, 13, 14. The selected ones of the converter stations 10, 11, 12, 13, 14 may be referred to as pilot nodes, or pilot converter stations, and hence there may possibly be more than one pilot node, or pilot converter station. The combination of voltage levels of at least two of the converter stations 10, 11, 12, 13, 14 may for example be determined by averaging the voltage levels of the at least two of the converter stations 10, 11, 12, 13, 14.

The determination of the pilot feedback signal may for example be carried out by the processing and/or control unit 50 and/or a processing and/or control unit included in any of the converter stations 10, 11, 12, 13, 14. The pilot feedback signal is made available to all converter stations 10, 11, 12, 13, 14. For example, if the determination of the pilot feedback signal is carried out by the processing and/or control unit 50, the pilot feedback signal may be communicated from the processing and/or control unit 50 to each of the converter stations 10, 11, 12, 13, 14 via the communication means 40. And in case the determination of the pilot feedback signal is carried out by a processing and/or control unit included in any one of the converter stations 10, 11, 12, 13, 14 (e.g., in the pilot converter station, or in one of the pilot converter stations if there are several pilot converter stations), the pilot feedback signal may be communicated from the one of the converter stations 10, 11, 12, 13, 14 to the other converter stations via the communication means 40.

As mentioned in the foregoing, the pilot feedback signal is made available to all converter stations 10, 11, 12, 13, 14, and for each of the converter stations 10, 11, 12, 13, 14 at least one control signal is determined, using the method 300 illustrated in Figure 3. However, it is to be understood that there may be one or more additional converter stations comprised in the power transmission system 100 for which the method 300 is not applied. That is, for such one or more additional converter stations at least one control signal may not be determined using the method 300 illustrated in Figure 3. For example, for such one or more additional converter stations, the pilot feedback signal may not be made available. Thus, the method 300 may not be applied to every converter station that may be comprised in the power transmission system 100.

The pilot feedback signal determined at 301 may be time-stamped, for example using a Global Positioning System (GPS) based time source. In alternative, or in addition, a type of time source other than a GPS-based one could be used. By time-stamping the pilot feedback signal, the pilot feedback signal may include information indicative of the time instant when the pilot feedback signal was determined, or a period of time during which the pilot feedback signal was determined. For example, by time-stamping the pilot feedback signal, any latency in communicating of the pilot feedback signal to or from one or more of the converter stations 10, 11, 12, 13, 14 may be estimated or determined.

At 302, a power transmission system power flow parameter, indicative of a difference between the power flow into the power transmission system 100 and the power flow out of the power transmission system 100, is determined. As illustrated in Figure 3 by the connection between blocks 301 and 302, the pilot feedback signal may be input to block 302, and the power transmission system power flow parameter may be determined at 302 based on the pilot feedback signal determined at 301. For example, the power transmission system power flow parameter may be determined as being equal to the pilot feedback signal, which pilot feedback signal - in accordance with the embodiment of the present invention illustrated in Figure 3 - is equal to the pilot voltage difference V_{pilot, ref} - Vₚᵢₗₒₜ. If the pilot voltage difference V_{pilot, ref} - Vₚᵢₗₒₜ is positive, then there is a deficit of power in the power transmission system 100. and if the pilot voltage difference V_{pilot, ref} - Vₚᵢₗₒₜ is negative, then there is a surplus of power in the power transmission system 100. Thus, by determining the power transmission system power flow parameter at 302 based on the pilot feedback signal as described in the foregoing, the power transmission system power flow parameter will be indicative of a difference between the power flow into the power transmission system 100 and the power flow out of the power transmission system 100. In alternative, or in addition, the power transmission system power flow parameter could be determined based on measurements of power flow into and out of the power transmission system 100 (e.g., based on measurements of power flow into and out of the DC power system 30), so as to indicate a difference between the power flow into the power transmission system 100 and the power flow out of the power transmission system 100.

The determination of the power transmission system power flow parameter may for example be carried out by the processing and/or control unit 50 and/or a processing and/or control unit included in any of the converter stations 10, 11, 12, 13, 14 (e.g., in the pilot converter station, or in one of the pilot converter stations if there are several pilot converter stations).

At 304, a drooped error signal dP is determined for each of the converter stations 10, 11, 12, 13, 14 based on the power transmission system power flow parameter determined at 302. According to the embodiment of the present invention illustrated in Figure 3, the drooped error signal dP is determined for each of the converter stations 10, 11, 12, 13, 14 based on a droop parameter. As indicated in Figure 3, the drooped error signal dP is output from block 304. For each of the converter stations 10, 11, 12, 13, 14, one droop constant of two droop constants D1 and D2 is selected, and the droop parameter is determined based on the selected droop constant. To that end, the block 304 may, as illustrated in Figure 3, take the droop constants D1 and D2 as inputs from blocks 305 and 306, respectively, and the droop parameter is determined at 304 as the selected one of the two droop constants D1 and D2 received from blocks 305 and 306, respectively. Each of the two droop constants D1 and D2 has a selected or predefined value corresponding to the sign of the power transmission system power flow parameter determined at 302. It is to be understood that even though Figure 3 illustrates two droop constants D1 and D2, there could be more than two droop constants, wherein for each of the converter stations 10, 11, 12, 13, 14, one droop constant of the droop constants may be selected, and with the droop parameter being determined based on the selected droop parameter. Each of the droop constants (e.g., each of D1 and D2) may be larger than or equal to zero. The droop constants may, e.g., be expressed in units of MW/kV. According to the embodiment of the present invention illustrated in Figure 3, the power transmission system power flow parameter determined at 302 is equal to the pilot feedback signal, which is equal to the pilot voltage difference V_{pilot, ref} - Vₚᵢₗₒₜ. And as mentioned in the foregoing, if the pilot voltage difference V_{pilot, ref} - Vₚᵢₗₒₜ is positive, then there is a deficit of power in the power transmission system 100. and if the pilot voltage difference V_{pilot, ref} - Vₚᵢₗₒₜ is negative, then there is a surplus of power in the power transmission system 100. Thus, the droop parameter may be determined at 304 as one of the two droop constants D1 and D2 if the sign of the value of the power transmission system power flow parameter is positive, while the droop parameter may be determined at 304 as the other one of two droop constants D1 and D2 if the sign of the value of the power transmission system power flow parameter is negative. Since the sign of the difference V_{pilot, ref} - Vₚᵢₗₒₜ indicates whether there is a deficit or surplus of power in the power transmission system (when the sign of the difference V_{pilot, ref} - Vₚᵢₗₒₜ is negative and positive, respectively), this means that the selection of one of the two droop constants D1 and D2 may be based on whether there is a surplus or a deficit of power in the power transmission system 100.

As mentioned in the foregoing, the drooped error signal is determined at 304 for each of the converter stations 10, 11, 12, 13, 14 based on a droop parameter. There may be different droop parameters associated with the respective ones of the converter stations 10, 11, 12, 13, 14, or some of the converter stations 10, 11, 12, 13, 14 may possibly be associated with the same droop parameter. The droop constants D1 and D2 may not be the same for each of the converter stations 10, 11, 12, 13, 14, and the sets of droop constants D1 and D2 for the respective converter stations 10, 11, 12, 13, 14 may be different for different ones of the converter stations 10, 11, 12, 13, 14. For each of the converter stations 10, 11, 12, 13, 14, one droop constant of two droop constants D1 and D2 may be selected, and the droop parameter may be determined based on the selected droop constant such that the droop parameter is being equal to the selected droop constant. The drooped error signal dP may then be determined by multiplying the droop parameter with the power transmission system power flow parameter.

For example, as described in the foregoing, the power transmission system power flow parameter determined at 302 may be determined being equal to the pilot feedback signal, which is equal to the pilot voltage difference V_{pilot, ref} - V_{pilot,} and the droop parameter may be determined at 304 as one of the two droop constants D1 and D2 if the sign of the value of the power transmission system power flow parameter is positive, while the droop parameter may be determined at 304 as the other one of two droop constants D1 and D2 if the sign of the value of the power transmission system power flow parameter is negative. For example, D1 may be selected if V_{pilot, ref} - Vₚᵢₗₒₜ > 0, and D2 may be selected if V_{pilot, ref} - Vₚᵢₗₒₜ ≤0. This means that according to this example, dP = (Vₚᵢₗₒₜ, _{ref} - Vₚᵢₗₒₜ)D 1, if V_{pilot,} ref - Vₚᵢₗₒₜ > 0, and dP = (Vₚᵢₗₒₜ, ref - Vₚᵢₗₒₜ)D2, if V_{pilot,} ref - Vₚᵢₗₒₜ ≤0.

At 307, at least one control signal is determined for each of the converter stations 10, 11, 12, 13, 14 based on the drooped error signal dP determined for the converter station 10, 11, 12, 13, 14. The at least one control signal for each of the converter stations 10, 11, 12, 13, 14 may be based on only the drooped error signal dP determined for the converter station 10, 11, 12, 13, 14. In addition, the at least one control signal for each of the converter stations 10, 11, 12, 13, 14 could be further based for example on a feedback power flow. The feedback power flow may be based on a power flow in the power transmission system 100 and possibly a reference power flow.

As described in the foregoing with reference to Figure 2, each of the converter stations 10, 11, 12 is connected at an AC side thereof to the first AC power system 30, and each of the converter stations 13, 14 is connected at an AC side thereof to the second AC power system 31. The power flowing into each of the converter stations from its AC side, P, may be measured, e.g., at a PCC in the first AC power system 30 or in the second AC power system 31. The power P may be compared with a reference power P_{ref}, which could be referred to as a target power, e.g., for the respective ones of the converter stations 10, 11, 12, 13, 14.

At 309, a feedback power flow may be determined for each of the converter stations 10, 11, 12, 13, 14 based on P and P_{ref} for the respective converter station 10, 11, 12, 13, 14. Further, the difference P_{ref} - P may be determined at 309, such as indicated in Figure 3, which may be output from block 309 and input into block 307. Thus, the at least one control signal for each of the converter stations 10, 11, 12, 13, 14 determined at 307 could be based not only on the drooped error signal dP determined for the converter station 10, 11, 12, 13, 14 but could in addition be based on the feedback power flow determined for each of the converter stations 10, 11, 12, 13, 14, e.g., P_{ref}-P.

In the light of the foregoing, the at least one control signal for each of the converter stations 10, 11, 12, 13, 14 determined at 307 may hence for example be determined as (P_{ref} - P) + dP = (P_{ref} - P) + (Vpᵢₗₒₜ, _{ref} - Vpᵢₗₒₜ)D1, if Vₚᵢₗₒₜ, _{ref} - Vₚᵢₗₒₜ > 0, and as (P_{ref} - P) + dP = (P_{ref} - P) + (V_{pilot, ref} - Vₚᵢₗₒₜ)D2, if V_{pilot, ref} - Vₚᵢₗₒₜ ≤ 0.

The at least one control signal (e.g., (P_{ref} - P) + dP) for each of the converter stations 10, 11, 12, 13, 14 determined at 307 can be input into a control block, or regulating means, 308, which for example may comprise a PI-regulator, as indicated in Figure 3, comprising a proportional gain device and integral gain device. The signal outputted from the control block 308 may for example be used in control circuits, or control loops, for providing switching pulses to semiconductor devices of the respective ones of the converter stations 10, 11, 12, 13, 14. Thus, by providing each of the converter stations 10, 11, 12, 13, 14 with the at least one control signal determined for the converter station 10, 11, 12, 13, 14, operation of the respective ones of the converter stations 10, 11, 12, 13, 14 is controlled. For example, each of the converter stations 10, 11, 12, 13, 14 may comprise at least one converter valve (not shown) which may be controllable by means of providing at least one converter valve current order thereto. At least one converter valve current order for the at least one converter valve of the respective ones of the converter stations 10, 11, 12, 13, 14 may be determined based on the control signals determined for the respective ones of the converter stations 10, 11, 12, 13, 14. Each of the converter stations 10, 11, 12, 13, 14 may be provided with the corresponding at least one converter valve current order.

By means of controlling operation of the respective ones of the converter stations 10, 11, 12, 13, 14, by providing the control signals determined for the respective ones of the converter stations 10, 11, 12, 13, 14 to the respective ones of the converter stations 10, 11, 12, 13, 14, power flow in the power transmission system 100 may in turn be controlled.

For example, the methodology described in B. Berggren et al., "DC Grid Control Through the Pilot Voltage Droop Concept - Methodology for Establishing Droop Constants", IEEE Transactions on Power Systems, volume 30, no. 5, pages 2312-2320, September 2015, may be adapted to determine the droop constants D1 and D2 (and any other droop constant(s)) may be determined such that the pilot voltage remains within a target DC voltage range (or allowed DC voltage range), and such that a relatively high flexibility in controlling of how power at the different ones of the converter stations 10, 11, 12, 13, 14 in the power transmission system 100 is distributed during the power imbalance in the power transmission system 100 may be achieved.

One or more of the blocks 304, 307, 308, and 309 as described in the foregoing may for example be carried out in processing and/or control units included in the respective ones of the converter stations 10, 11, 12, 13, 14, or in the processing and/or control unit 50.

In conclusion, a method in a power transmission system is disclosed. The power transmission system comprises a plurality of interconnected converter stations. A pilot feedback signal is determined. The pilot feedback signal is based on at least one voltage level in the power transmission system and is common for all of the converter stations. A power transmission system power flow parameter, indicative of a difference between the power flow into the power transmission system and the power flow out of the power transmission system, is determined. The power transmission system power flow parameter is determined based on the pilot feedback signal. For each of the converter stations, a drooped error signal is determined based on the power transmission system power flow parameter. For each of the converter stations, at least one control signal is determined based at least on the drooped error signal determined for the converter station.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims, which define the scope of protection.

## Claims

1. A method (300) in a power transmission system, the power transmission system comprising a plurality of interconnected converter stations, wherein operation of the converter stations can be controlled by means of providing at least one control signal to the respective ones of the converter stations, the method comprising:
determining a pilot feedback signal (301), the pilot feedback signal being based on at least one voltage level in the power transmission system, wherein the pilot feedback signal is common for all of the converter stations;
the method being **characterized by**:
determining a power transmission system power flow parameter (302) indicative of a difference between the power flow into the power transmission system and the power flow out of the power transmission system, wherein the power transmission system power flow parameter is determined based on the pilot feedback signal;
for each of the converter stations, selecting one droop constant of two droop constants, each of the two droop constants having selected or predefined value corresponding to the sign of the power transmission system power flow parameter,
for each of the converter stations, determining the droop parameter based on the selected droop constant,
for each of the converter stations, determining a drooped error signal (304) based on the droop parameter;
for each of the converter stations, determining at least one control signal (307) based at least on the drooped error signal determined for the converter station;
controlling operation of the respective ones of the converter stations by providing each of the converter stations with the at least one control signal determined for the converter station.

2. A method according to claim 1, wherein the drooped error signal is determined based on a droop parameter, the method further comprising, for each of the converter stations:
selecting one droop constant of at least two droop constants, each of the at least two droop constants having a predefined value corresponding to a value or a range of values of the power transmission system power flow parameter;
determining the droop parameter based on the selected droop constant.

3. A method according to claim 1 or 2, wherein the droop parameter is determined as being equal to the selected droop constant, and wherein the drooped error signal is determined by multiplying the droop parameter with the power transmission system power flow parameter.

4. A method according to any one of claims 1-3, wherein each of the at least two droop constants having a predefined value corresponding to a value or a range of values of the power transmission system power flow parameter, wherein the determining of the drooped error signal for the converter station is based on the selected droop constant.

5. A method according to claim 4, wherein the set of at least two droop constants associated with at least one of the converter stations is different from the set of at least two droop constants associated with at least one other converter station.

6. A method according to claim 4, wherein the sets of at least two droop constants associated with the respective ones of the converter stations are the same.

7. A method according to any one of claims 1-6, wherein the pilot feedback signal is determined based on at least a voltage level of a predetermined one of the converter stations.

8. A method according to any one of claims 1-7, wherein the pilot feedback signal is determined based on a combination of voltage levels of at least two of the converter stations.

9. A method according to claim 8, wherein the combination of voltage levels of at least two of the converter stations is determined by averaging the voltage levels of at least two of the converter stations.

10. A method according to any one of claims 1-9, wherein the power transmission system comprises communication means configured to permit communication between at least some of the converter stations, the method further comprising:
communicating the pilot feedback signal to at least one of the converter stations via the communication means.

11. A method according to any one of claims 1-10, wherein the determining of a control signal for each of the converter stations is further based on a feedback power flow, the feedback power flow being based on a power flow in the power transmission system and a reference power flow.

12. A method according to any one of claims 1-11, wherein each converter station has an Alternating Current, AC, side connected to an AC power system, the method further comprising:
for each of the converter stations, determining a feedback power flow based on at least a power flow into the converter station from its AC side and a reference power flow for the converter station;
wherein the determining of a control signal for each of the converter stations is further based on the feedback power flow for the respective ones of the converter stations.

13. A method according to any one of claims 1-12, wherein each of the converter stations comprises at least one converter valve controllable by means of providing at least one converter valve current order thereto, and wherein the controlling of operation of the respective ones of the converter stations comprises determining at least one converter valve current order for the at least one converter valve of the respective ones of the converter stations based on the control signals determined for the respective ones of the converter stations, and providing each of the converter stations with the corresponding at least one converter valve current order.

14. A processing and/or control unit (50) configured to be used in conjunction with a power transmission system (100) comprising a plurality of interconnected converter stations (10, 11, 12, 13, 14), wherein operation of the converter stations can be controlled by means of providing at least one control signal to the respective ones of the converter stations, the processing and/or control unit being configured to:
determine a pilot feedback signal, the pilot feedback signal being based on at least one voltage level in the power transmission system, wherein the pilot feedback signal is common for all of the converter stations;
**characterized in that** the processing and/or control unit is configured to:
based on the pilot feedback signal, determine a power transmission system power flow parameter indicative of a difference between the power flow into the power transmission system and the power flow out of the power transmission system;
for each of the converter stations, select one droop constant of two droop constants, each of the two droop constants having a selected/predefined value corresponding to the sign of the power transmission system power flow parameter,
for each of the converter stations, determine the droop parameter based on the selected droop constant,
for each of the converter stations, determine a drooped error signal based on the droop parameter;
for each of the converter stations, determine at least one control signal based at least on the drooped error signal determined for the converter station;
control operation of the respective ones of the converter stations by providing each of the converter stations with the at least one control signal determined for the converter station.

15. A computer program product configured to, when executed in a processing and/or control unit (50) according to claim 14 perform a method (300) according to any one of claims 1-13.

16. A computer-readable storage medium on which there is stored a computer program product configured to, when executed in a processing and/or control unit (50) according to claim 14, perform a method (300) according to any one of claims 1-13.

## Patentansprüche

1. Verfahren (300) in einem Energieübertragungssystem, wobei das Energieübertragungssystem mehrere miteinander verbundene Stromrichterstationen umfasst, wobei der Betrieb der Stromrichterstationen durch Bereitstellen mindestens eines Steuersignals für die jeweiligen der Stromrichterstationen gesteuert werden kann, wobei das Verfahren umfasst:
Bestimmen eines Pilot-Rückkopplungssignals (301), wobei das Pilot-Rückkopplungssignal auf mindestens einem Spannungspegel in dem Energieübertragungssystem basiert, wobei das Pilot-Rückkopplungssignal für alle der Stromrichterstationen gemeinsam ist;
wobei das Verfahren **gekennzeichnet ist durch**:
Bestimmen eines Energieübertragungssystem-Energieflussparameters (302), der kennzeichnend für eine Differenz zwischen dem Energiefluss in das Energieübertragungssystem und dem Energiefluss aus dem Energieübertragungssystem ist, wobei der Energieübertragungssystem-Energieflussparameter basierend auf dem Pilot-Rückkopplungssignal bestimmt wird;
für jede der Stromrichterstationen, Auswählen einer Droop-Konstante von zwei Droop-Konstanten, wobei jede der beiden Droop-Konstanten einen ausgewählten oder vordefinierten Wert hat, der dem Vorzeichen des Energieübertragungssystem-Energieflussparameters entspricht,
für jede der Stromrichterstationen, Bestimmen des Droop-Parameters basierend auf der gewählten Droop-Konstante, für jede der Stromrichterstationen, Bestimmen eines Droop-Fehlersignals (304) basierend auf dem Droop-Parameter;
für jede der Stromrichterstationen, Bestimmen mindestens eines Steuersignals (307) basierend zumindest auf dem für die Stromrichterstation bestimmten Droop-Fehlersignal;
Steuern des Betriebs der jeweiligen der Stromrichterstationen **durch** Bereitstellen des mindestens einen für die Stromrichterstation bestimmten Steuersignals für jede der Stromrichterstationen.

2. Verfahren nach Anspruch 1, wobei das Droop-Fehlersignal basierend auf einem Droop-Parameter bestimmt wird, wobei das Verfahren für jede der Stromrichterstationen ferner umfasst:
Auswählen einer Droop-Konstante aus mindestens zwei Droop-Konstanten, wobei jede der mindestens zwei Droop-Konstanten einen vordefinierten Wert hat, der einem Wert oder einem Wertebereich des Energieübertragungssystem-Energieflussparameters entspricht;
Bestimmen des Droop-Parameters basierend auf der gewählten Droop-Konstante.

3. Verfahren nach Anspruch 1 oder 2, wobei der Droop-Parameter als gleich der gewählten Droop-Konstante bestimmt wird, und wobei das Droop-Fehlersignal durch Multiplizieren des Droop-Parameters mit dem Energieübertragungssystem-Energieflussparameter bestimmt wird.

4. Verfahren nach einem der Ansprüche 1-3, wobei jede der mindestens zwei Droop-Konstanten einen vordefinierten Wert hat, der einem Wert oder einem Wertebereich des Energieübertragungssystem-Energieflussparameters entspricht, wobei das Bestimmen des Droop-Fehlersignals für die Stromrichterstation auf der gewählten Droop-Konstante basiert.

5. Verfahren nach Anspruch 4, wobei der Satz von mindestens zwei Droop-Konstanten, der mindestens einer der Stromrichterstationen zugeordnet ist, sich von dem Satz von mindestens zwei Droop-Konstanten unterscheidet, der mindestens einer anderen Stromrichterstation zugeordnet ist.

6. Verfahren nach Anspruch 4, wobei die Sätze von mindestens zwei Droop-Konstanten, die den jeweiligen der Stromrichterstationen zugeordnet sind, gleich sind.

7. Verfahren nach einem der Ansprüche 1-6, wobei das Pilot-Rückkopplungssignal basierend auf mindestens einem Spannungspegel einer der vorbestimmten Stromrichterstationen bestimmt wird.

8. Verfahren nach einem der Ansprüche 1-7, wobei das Pilot-Rückkopplungssignal basierend auf einer Kombination von Spannungspegeln von mindestens zwei der Stromrichterstationen bestimmt wird.

9. Verfahren nach Anspruch 8, wobei die Kombination der Spannungspegel von mindestens zwei der Stromrichterstationen durch Mitteln der Spannungspegel von mindestens zwei der Stromrichterstationen bestimmt wird.

10. Verfahren nach einem der Ansprüche 1-9, wobei das Energieübertragungssystem Kommunikationsmittel umfasst, die dazu ausgelegt sind, eine Kommunikation zwischen mindestens einigen der Stromrichterstationen zu ermöglichen, wobei das Verfahren ferner umfasst:
Kommunizieren des Pilot-Rückkopplungssignals an mindestens eine der Stromrichterstationen über die Kommunikationsmittel.

11. Verfahren nach einem der Ansprüche 1-10, wobei das Bestimmen eines Steuersignals für jede der Stromrichterstationen ferner auf einem Rückkopplungsenergiefluss basiert, wobei der Rückkopplungsenergiefluss auf einem Energiefluss in dem Energieübertragungssystem und einem Referenzenergiefluss basiert.

12. Verfahren nach einem der Ansprüche 1-11, wobei jede Stromrichterstation eine Wechselstromseite hat, die an ein Wechselstromsystem angeschlossen ist, wobei das Verfahren ferner umfasst:
für jede der Stromrichterstationen, Bestimmen eines Rückkopplungsenergieflusses, basierend auf mindestens einem Energiefluss in die Stromrichterstation von ihrer Wechselstromseite und einem Referenzenergiefluss für die Stromrichterstation;
wobei das Bestimmen eines Steuersignals für jede der Stromrichterstationen ferner auf dem Rückkoppelungsenergiefluss für die jeweiligen der Stromrichterstationen basiert.

13. Verfahren nach einem der Ansprüche 1-12, wobei jede der Stromrichterstationen mindestens ein Stromrichterventil umfasst, das durch Bereitstellen mindestens eines Stromrichterventilstrombefehls dafür gesteuert werden kann, und wobei das Steuern des Betriebs der jeweiligen der Stromrichterstationen das Bestimmen mindestens einer Stromrichterventilstromfolge für das mindestens eine Stromrichterventil der jeweiligen Stromrichterstationen basierend auf den für die jeweiligen der Stromrichterstationen bestimmten Steuersignalen und das Bereitstellen der entsprechenden mindestens einen Stromrichterfolge für jede der Stromrichterstationen umfasst.

14. Verarbeitungs- und/oder Steuereinheit (50), die dazu ausgelegt ist, in Verbindung mit einem Energieübertragungssystem (100) verwendet zu werden, das mehrere miteinander verbundene Stromrichterstationen (10, 11, 12, 13, 14) umfasst, wobei der Betrieb der Stromrichterstationen durch Bereitstellen mindestens eines Steuersignals für die jeweiligen der Stromrichterstationen gesteuert werden kann, wobei die Verarbeitungs- und/oder Steuereinheit dazu ausgelegt ist:
ein Pilot-Rückkopplungssignal zu bestimmen, wobei das Pilot-Rückkopplungssignal auf mindestens einem Spannungspegel in dem Energieübertragungssystem basiert, wobei das Pilot-Rückkopplungssignal für alle Stromrichterstationen gemeinsam ist;
**dadurch gekennzeichnet, dass** die Verarbeitungs- und/oder Steuereinheit dazu ausgelegt ist:
basierend auf dem Pilot-Rückkopplungssignal einen Energieübertragungssystem-Energieflussparameter zu bestimmen, der kennzeichnend für eine Differenz zwischen dem Energiefluss in das Energieübertragungssystem und dem Energiefluss aus dem Energieübertragungssystem ist;
für jede der Stromrichterstationen, eine Droop-Konstante von zwei Droop-Konstanten zu wählen, wobei jede der beiden Droop-Konstanten einen ausgewählten/vordefinierten Wert hat, der dem Vorzeichen des Energieübertragungssystem-Energieflussparameters entspricht,
für jede der Stromrichterstationen, den Droop-Parameters basierend auf der gewählten Droop-Konstante zu bestimmen, für jede der Stromrichterstationen, ein Droop-Fehlersignal basierend auf dem Droop-Parameter zu bestimmen;
für jede der Stromrichterstationen, mindestens ein Steuersignal basierend zumindest auf dem für die Stromrichterstation bestimmten Droop-Fehlersignal zu bestimmen;
den Betriebs der jeweiligen der Stromrichterstationen durch Bereitstellen des mindestens einen für die Stromrichterstation bestimmten Steuersignals für jede der Stromrichterstationen zu steuern.

15. Computerprogrammprodukt, das dazu ausgelegt ist, wenn es in einer Verarbeitungs- und/oder Steuereinheit (50) nach Anspruch 14 ausgeführt wird, ein Verfahren (300) nach einem der Ansprüche 1-13 durchzuführen.

16. Computerlesbares Speichermedium, auf dem ein Computerprogrammprodukt gespeichert ist, das dazu ausgelegt ist, wenn es in einer Verarbeitungs- und/oder Steuereinheit (50) nach Anspruch 14 ausgeführt wird, ein Verfahren (300) nach einem der Ansprüche 1-13 durchzuführen.

## Revendications

1. Procédé (300) dans un système de transmission d'énergie, le système de transmission d'énergie comprenant une pluralité de stations de conversion interconnectées, où le fonctionnement des stations de conversion peut être commandé au moyen de la fourniture d'au moins un signal de commande aux stations respectives des stations de conversion, le procédé comprenant les étapes suivantes :
déterminer un signal de rétroaction pilote (301), le signal de rétroaction pilote étant basé sur au moins un niveau de tension dans le système de transmission d'énergie, où le signal de rétroaction pilote est commun pour toutes les stations de conversion ;
le procédé étant **caractérisé par** les étapes suivantes :
déterminer un paramètre de flux d'énergie du système de transmission d'énergie (302) indicatif d'une différence entre le flux d'énergie dans le système de transmission d'énergie et le flux d'énergie hors du système de transmission d'énergie, où le paramètre de flux d'énergie du système de transmission d'énergie est déterminé sur la base du signal de rétroaction pilote ;
pour chacune des stations de conversion, sélectionner une constante de chute parmi deux constantes de chute, chacune des deux constantes de chute ayant une valeur sélectionnée ou prédéfinie correspondant au signe du paramètre de flux d'énergie du système de transmission d'énergie,
pour chacune des stations de conversion, déterminer le paramètre de chute sur la base de la constante de chute sélectionnée,
pour chacune des stations de conversion, déterminer un signal d'erreur en chute (304) basé sur le paramètre de chute ;
pour chacune des stations de conversion, déterminer au moins un signal de commande (307) basé au moins sur le signal d'erreur en chute déterminé pour la station de conversion ;
commander le fonctionnement des stations respectives des stations de conversion en fournissant à chacune des stations de conversion l'au moins un signal de commande déterminé pour la station de conversion.

2. Procédé selon la revendication 1, dans lequel le signal d'erreur en chute est déterminé sur la base d'un paramètre de chute, le procédé comprenant en outre, pour chacune des stations de conversion, les étapes suivantes :
sélectionner une constante de chute parmi au moins deux constantes de chute, chacune des au moins deux constantes de chute ayant une valeur prédéfinie correspondant à une valeur ou à une plage de valeurs du paramètre de flux d'énergie du système de transmission d'énergie ;
déterminer le paramètre de chute sur la base de la constante de chute sélectionnée.

3. Procédé selon la revendication 1 ou la revendication 2, dans lequel le paramètre de chute est déterminé comme étant égal à la constante de chute sélectionnée, et où le signal d'erreur en chute est déterminé en multipliant le paramètre de chute avec le paramètre de flux d'énergie du système de transmission d'énergie.

4. Procédé selon l'une quelconque des revendications 1 à 3, dans lequel chacune des au moins deux constantes de chute a une valeur prédéfinie correspondant à une valeur ou à une plage de valeurs du paramètre de débit d'énergie du système de transmission d'énergie, où la détermination du signal d'erreur en chute pour la station de conversion est basée sur la constante de chute sélectionnée.

5. Procédé selon la revendication 4, dans lequel l'ensemble d'au moins deux constantes de chute associées à au moins une des stations de conversion est différent de l'ensemble d'au moins deux constantes de chute associées à au moins une autre station de conversion.

6. Procédé selon la revendication 4, dans lequel les ensembles d'au moins deux constantes de chute associées aux stations respectives des stations de conversion sont les mêmes.

7. Procédé selon l'une quelconque des revendications 1 à 6, dans lequel le signal de rétroaction pilote est déterminé sur la base d'au moins un niveau de tension d'une station prédéterminée des stations de conversion.

8. Procédé selon l'une quelconque des revendications 1 à 7, dans lequel le signal de rétroaction pilote est déterminé sur la base d'une combinaison de niveaux de tension d'au moins deux des stations de conversion.

9. Procédé selon la revendication 8, dans lequel la combinaison des niveaux de tension d'au moins deux des stations de conversion est déterminée en faisant la moyenne des niveaux de tension d'au moins deux des stations de conversion.

10. Procédé selon l'une quelconque des revendications 1 à 9, dans lequel le système de transmission d'énergie comprend des moyens de communication configurés pour permettre la communication entre au moins certaines des stations de conversion, le procédé comprenant en outre :
la communication du signal de rétroaction pilote à au moins une des stations de conversion par l'intermédiaire des moyens de communication.

11. Procédé selon l'une quelconque des revendications 1 à 10, dans lequel la détermination d'un signal de commande pour chacune des stations de conversion est en outre basée sur un flux d'énergie de rétroaction, le flux d'énergie de rétroaction étant basé sur un flux d'énergie dans le système de transmission d'énergie et un flux d'énergie de référence.

12. Procédé selon l'une quelconque des revendications 1 à 11, dans lequel chaque station de conversion a un côté courant alternatif, AC, connecté à un système d'alimentation AC, le procédé comprenant en outre les étapes suivantes :
pour chacune des stations de conversion, déterminer un flux d'énergie de rétroaction basé sur au moins un flux d'énergie dans la station de conversion à partir de son côté AC et un flux d'énergie de référence pour la station de conversion ;
où la détermination d'un signal de commande pour chacune des stations de conversion est en outre basée sur le flux d'énergie de rétroaction pour les stations respectives des stations de conversion.

13. Procédé selon l'une quelconque des revendications 1 à 12, dans lequel chacune des stations de conversion comprend au moins une vanne de conversion pouvant être commandée au moyen de la fourniture d'au moins un ordre de courant de vanne de conversion à celle-ci, et où la commande du fonctionnement des stations respectives des stations de conversion comprend la détermination d'au moins un ordre de courant de vanne de conversion pour l'au moins une vanne de conversion des stations respectives des stations de conversion sur la base des signaux de commande déterminés pour les stations respectives des stations de conversion, et la fourniture à chacune des stations de conversion de l'au moins un ordre de courant de vanne de conversion correspondant.

14. Unité de traitement et/ou de commande (50) configurée pour être utilisée conjointement avec un système de transmission d'énergie (100) comprenant une pluralité de stations de conversion interconnectées (10, 11, 12, 13, 14), où le fonctionnement des stations de conversion peut être commandé au moyen de la fourniture d'au moins un signal de commande aux stations respectives des stations de conversion, l'unité de traitement et/ou de commande étant configurée pour :
déterminer un signal de rétroaction pilote, le signal de rétroaction pilote étant basé sur au moins un niveau de tension dans le système de transmission d'énergie, où le signal de rétroaction pilote est commun pour toutes les stations de conversion ;
**caractérisé en ce que** l'unité de traitement et/ou de commande est configurée pour :
sur la base du signal de rétroaction pilote, déterminer un paramètre de flux d'énergie du système de transmission d'énergie indicatif d'une différence entre le flux d'énergie dans le système de transmission d'énergie et le flux d'énergie hors du système de transmission d'énergie ;
pour chacune des stations de conversion, sélectionner une constante de chute parmi deux constantes de chute, chacune des deux constantes de chute ayant une valeur sélectionnée et/ou prédéfinie correspondant au signe du paramètre de flux d'énergie du système de transmission d'énergie,
pour chacune des stations de conversion, déterminer le paramètre de chute sur la base de la constante de chute sélectionnée,
pour chacune des stations de conversion, déterminer un signal d'erreur en chute basé sur le paramètre de chute ;
pour chacune des stations de conversion, déterminer au moins un signal de commande basé au moins sur le signal d'erreur en chute déterminé pour la station de conversion ;
commander le fonctionnement des stations respectives des stations de conversion en fournissant à chacune des stations de conversion l'au moins un signal de commande déterminé pour la station de conversion.

15. Produit programme informatique configuré, lorsqu'il est exécuté dans une unité de traitement et/ou de commande (50) selon la revendication 14, pour exécuter un procédé (300) selon l'une quelconque des revendications 1 à 13.

16. Support de stockage lisible par ordinateur sur lequel est stocké un produit programme informatique configuré, lorsqu'il est exécuté dans une unité de traitement et/ou de commande (50) selon la revendication 14, pour exécuter un procédé (300) selon l'une quelconque des revendications 1 à 13.
